(19) Europäisches Patentamt
European Patent Office
Office européen des brevets

(11) **EP 2 170 632 B1**

(12) **EUROPEAN PATENT SPECIFICATION**

(45) Date of publication and mention
of the grant of the patent:
**22.09.2010 Bulletin 2010/38**

(51) Int Cl.:
**B60C 27/12** *(2006.01)* **B60C 27/08** *(2006.01)*
**F16G 13/18** *(2006.01)*

(21) Application number: **08718143.4**

(22) Date of filing: **21.03.2008**

(86) International application number:
**PCT/EP2008/053440**

(87) International publication number:
**WO 2008/145429 (04.12.2008 Gazette 2008/49)**

(54) **SNOW CHAIN WITH DAMPENING INSERTS BETWEEN THE LINKS**

SCHNEEKETTE MIT DÄMPFUNGSEINSÄTZEN ZWISCHEN DEN GLIEDERN

CHAINE A NEIGE AVEC ELEMENTS D'AMORTISSEMENT ENTRE LES MAILLONS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **01.06.2007 IT MI20071129**

(43) Date of publication of application:
**07.04.2010 Bulletin 2010/14**

(73) Proprietor: **MAGGI CATENE S.p.A.**
**23854 Olginate (Lecco) (IT)**

(72) Inventors:
• **MAGGI, Corrado**
**I-23896 Sirtori (IT)**

• **BOUVIER, Jean-Pierre**
**CH-1070 Puidoux-Gare (CH)**

(74) Representative: **Faggioni, Carlo Maria et al**
**Fumero**
**Studio Consulenza Brevetti**
**Pettenkoferstrasse 27**
**80336 Munich (DE)**

(56) References cited:
**EP-A- 0 183 641 DE-A1- 2 112 477**
**FR-A- 2 451 510**

**Description**

The present invention concerns a snow chain for terrestrial vehicles and, in particular, a snow chain with self-tensioning properties.

As known, snow chains for road vehicles are available on the market in more or less sophisticated, different models. In general, all models comprise a wheel rolling track - typically comprising at least a portion of metal chain - intended to rest on the tread, and retaining elements enfolding at least part of the tyre shoulder and ending with means fixing the same to the wheel rim.

In order to keep the chain properly mounted on the tyre, it is necessary for some specifically elastic components to be also provided. This requirement arises from the need to ease the mounting of the chain on the tyre, which can thereby be mounted loosely and then secured more tightly on the wheel, but also from the need to take up the inevitable slack which is anyway found between chain and tyre (since, due to economy reasons, each chain size is designed to be suitable for a number of tyre sizes).

In conventional chains, the elastic component is for example a rubber ring, (having a diameter normally slightly smaller than that of the tyre shoulder) intended to remain on the front side of the wheel, to which a series of junctions are circumferentially connected for linking to the chain rolling track.

In so-called self-tensioning chains, the elastic component is in the shape of a rubber tensioner which is connected to a terminal end of the front peripheral circumferential ring, for example as shown in EP1520734 in the name of the same Applicant.

Also in front-mounted chains, for example as described in EP0351362, elastic recovering components are provided - intended to adapt the size of the wheel rolling track to the tyre - in addition to the elastic contribution offered by the connecting arms. A further tire chain according to the preamble of claim is disclosed in DE-A-2112477.

All these known-art elastic components, however, display various problems.

Firstly, since they are single components, they impart an elastic return force concentrated in one or a few locations of the snow chain, which determines imbalanced force components which, in the long run, unevenly displace the chain on the tyre. A typical example is precisely the elastic rubber ring in conventional chains, which tends to pull radially towards the centre some individual peripheral links, deforming zigzagwise the circumferential chain of the rolling track.

Another drawback, which derives from the very nature of these individual components is that, by concentrating all the necessary elastic action in one or few tensioning elements, in case of breakage of such components the chain is no longer able to adequately perform its function.

Again, in the case of self-tensioning chains, in order to enable the elastic tensioner to work properly, it is necessary to provide a length of chain which, after running through a so-called non-return ratchet, extends diametrically across the wheel: the presence of this length of chain across the rim potentially damages the rim during the shudders and jolts following motion of the wheel.

Finally, these elastic components are normally rather complex and require the presence of additional metal or plastic components, with which they are capable of cooperating for correct operation: this implies additional, undesired costs.

On the other hand, these drawbacks implicitly stem from the need to nevertheless use metal chain elements in all the portions of the system undergoing significant stress (both in terms of tension and in terms of abrasion against the soil). Hence, the various elastic tensioning elements (per se unable to provide high resistance) so far have been designed as independent elements which are connected in preset points of the lengths of metal chain to impart merely an elastic tensioning action. Moreover, in the case of self-tensioning, anti-skid systems, such approach is more limiting, since it is necessary to have tensioning elements specifically designed for performing an elastic return with a long travel between two mutually-mobile metal chain portions.

The object of the present invention is hence that of providing an anti-skid system which fully overcomes the prior art drawbacks just set forth.

Such object is achieved by means of a device as described in its essential features in the accompanying main claim.

Other inventive aspects of the snow chain are described in the dependent claims.

Further features and advantages of the anti-skid system according to the invention will in any case be clearer from the following detailed description of a preferred embodiment of the same, given by way of example and illustrated in the accompanying drawings, wherein:

fig. 1 is an elevation side view of a length of chain according to the invention;
figs. 2A and 2B are top plan and elevation side views, respectively, of an elastic body according to a preferred embodiment of the invention;
fig. 3 is a view of a snow chain according to a possible embodiment of the invention;

fig. 4 is an enlarged view of a closing lever according to a preferred embodiment of the invention; and
figs. 5A-5C are elevation front, elevation side and perspective views, respectively, of a further embodiment of the elastic body of the invention.

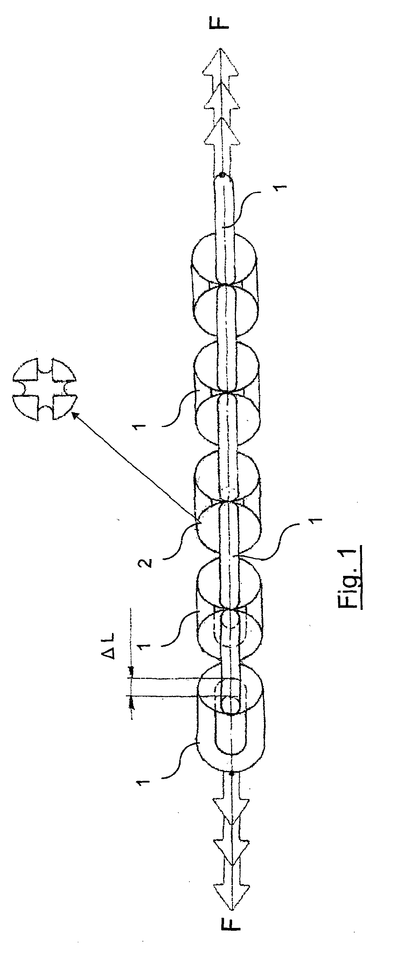

Fig. 1 shows a length of metal chain belonging to the resistant structure of an anti-skid system. It consists, in a manner known per se, of a series of interconnected links 1, for example closed and welded one into the other. The metal chain is of the conventional type, for example a carbon steel chain with links having a (steel wire or rod) section of 0 2.5 mm.

Traditionally, a chain made of links is flexible because the individual links are mutually coupled with a wide slack; that is, each link is loosely inserted in the eyelet of the preceding one and of the subsequent one, which allows a wide relative movement between one link and the other. A link which can be conveniently used in such a chain has an eyelet of a slightly greater height than the thickness of the body (normally consisting of a circular-section rod) and a length equal to at least 3 times such thickness.

Such a metal chain length, as already mentioned, is employed in an anti-skid system in all the portions intended to provide significant resistance. Typically, metal chain is found at least on the rolling track (on the tread intended to come into contact with the ground) and on the tyre front shoulder, where it is necessary to enclose the tyre with a strong resistance to prevent the anti-skid system from opening and coming off the wheel.

According to the invention, as shown in fig. 1, between each pair of links - at least along a predefined chain portion of the anti-skid system - there is inserted a dampening body 2, kept in place by coupling.

In particular, dampening body 2 is designed to be housed in the space defined between the two adjacent end portions of two cooperating links, partly engaging with one and partly with the other of the two links.

Dampening body 2, being arranged between the two adjacent links, prevents the two end bends of such links (defined by the respective rods of the body) from coming in contact with each other. In particular, said dampening elastic body is intended to keep the links mutually apart by a distance $\Delta L$, which is of course a function of its size.

For the desired operation - as will be apparent in the following - $\Delta L$ preferably lies in the range 2-14 mm for the car sector and up to 24 mm for the lorry sector.

Per se, the dampening body could be limited in its size, ending up occupying only the space between the two end bends of two adjacent links, as much as required to impart an elastic force which tends to draw them apart by distance $\Delta L$.

However, preferably, the central part of the dampening body actually performs the function of an elastic spacer between the links, but the remaining portion of the dampening body is wider and is of such a shape as to adequately couple partly with one link and partly with the adjacent link, so as to remain firmly fastened in position.

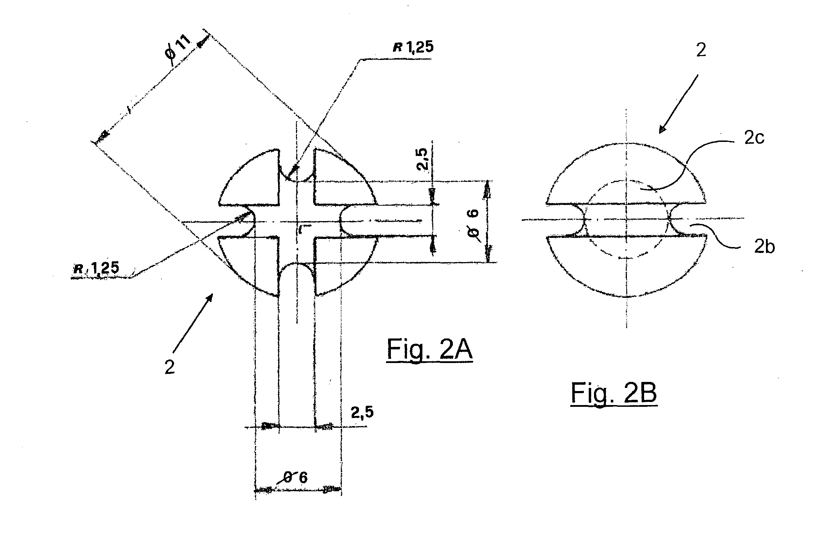

Although the dampening body can take up various shapes (for example also as an elastomeric element directly moulded onto the chain links), advantageously, according to a preferred embodiment, the dampening body is a self-contained unit of a substantially spherical shape with circumferential grooves 2a and 2b along two longitudinal meridians of the body, as illustrated in figs. 2A and 2B. Dampening body 2 advantageously consists of elastomeric material, such as natural rubber.

This structure is particularly advantageous, since it has a core portion which has the function of keeping the two links elastically separated, and a peripheral portion, wherein grooves 2a and 2b are obtained, which engages with the two links so as to prevent dampening body 2 from coming out of its working position and possibly become detached from the chain. The self-contained dampening body may be manufactured separately in large series (with extremely reduced costs) and then applied to the metal chain.

Fig. 2A shows example dimensions of the spherical dampening body, it being understood that they are not at all limiting but may vary depending on the requirements and the type of snow chain used.

In particular, dampening body 2 has a solid core 2c which has a diameter equal to a distance $\Delta L$, which distance is intended to be maintained between two adjacent links of the chain (at rest, i.e. in the absence of traction on the chain). The outer diameter of spherical body 2 may be equal to the width of the annular link (in such case, grooves 2a and 2b have a depth equal to the thickness of the rod of the link body), but even greater, so that the spherical surface protrudes with respect to the profile of the links, achieving the further advantage which will be illustrated below.

The outer diameter of spherical bodies 2 cannot in any case be above a certain measure, which depends on the length of the links. As a matter of fact, the diameter of the dampening bodies is limited by the half-length of the link, a measure beyond which two adjacent spheres 2 would interfere too much with each other: as long as they are able to compress sufficiently against each other, no particular problem arises, but beyond a certain measure high friction values, chain mobility reduction and early wear of the spheres would result.

Conversely, in some cases in which the links are particularly elongated (for example the circumferential chains adhering to the tyre shoulder, or on the chains of the wheel rolling track for trucks), the spherical shape of the elastic body is not perfectly suitable. As a matter of fact, if one wanted to exploit the full mobility extension possible between the links, it would be necessary to arrange elastic bodies with a very large diameter which would be very bulky in a transversal direction across the links.

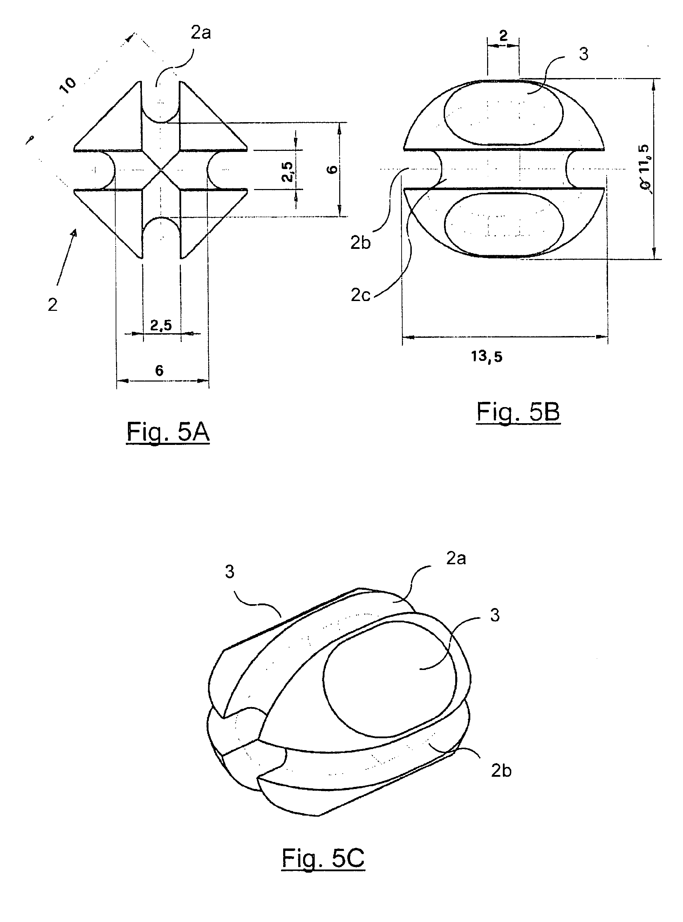

This last limit of the elastic bodies having a spherical shape may be overcome by a differently-shaped body. For example, in figs. 5A-5C another embodiment of the dampening body is shown, wherein the corresponding parts are numbered identically. Here, too, dimensions to be intended as an example and not as a limit are shown.

In this case elastic body 2 is generically olive-shaped, as can be clearly appreciated in fig. 5C, so as to determine a length of core 2c greater than its width.

Advantageously, bevels 3 may also be provided on the outer surface of the elastic body to reduce, where not necessary, the bulk of body 2. The provision of these bevels 3, typically between grooves 2a and 2b, eases the introduction of bodies 2 between the opposite links of the chain. As a matter of fact, since the coupling of elastic bodies 2 between the links implies the provisional deformation thereof, the removal of a portion of volume reduces the compression energy required for the deformation.

The two grooves 2a and 2b, practised along two meridians, may be mutually perpendicular (as can be appreciated in figs. 2A and 5A), which forces the links to arrange themselves mutually perpendicularly, as in fig. 1. Alternatively, the grooves may also intersect at different angles, for example 45° angles, to constrain the links to arrange themselves at 45° (according to the teachings of EP1327537 in the name of the same Applicant).

The presence of the dampening bodies between the links certainly reduces the mutual freedom of movement thereof but, due to the elasticity thereof, nevertheless allows significant flexibility.

The most important effect is the fact that, in the presence of the dampening inserts, the nominal length of the chain length is reduced by

$$G \ = \sum_{1}^{n-1} \Delta L \qquad\qquad (1)$$

wherein n is the number of links of the length of chain provided with dampening inserts 2, with respect to the maximum theoretic length which the fully extended chain without such inserts could be.

Advantageously, the length difference G is a dimension which can largely be elastically retrieved when a suitable traction is imparted on the chain, which traction is sufficient to compress the cores 2c of the dampening bodies and hence to reduce the distance $\Delta L$ of the links to each other.

Due to this advantageous feature of the above-described structure, a snow chain provided, according to the invention, with one or with a plurality of lengths of chain with dampening bodies achieves an innovative functionality.

As a matter of fact, the presence of the elastomeric bodies provides an opportunity for elastic lengthening and shortening of the chain which allows to achieve results similar to those of traditional elastic components for taking up the slack and for self-tensioning, however, without the problems connected with said elastic components.

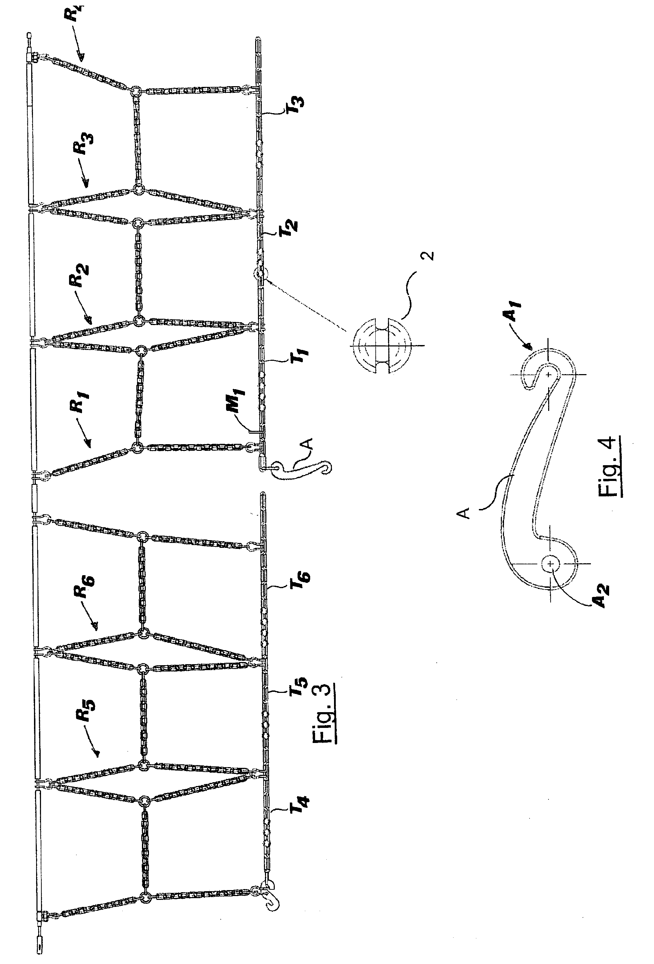

In particular, the snow chain may be provided with a series of elastomeric bodies evenly spread out across the outer circumferential chain ring (i.e. on the front of the tyre), as diagrammatically illustrated in fig. 3.

The presence of a minimum number of spheres simply provides an effect of taking up the slack or of adapting the chain to the specific tyre measure. A larger number of spheres imparts a greater elastic effect, which makes also self-tensioning of the chain possible. For such purpose, as illustrated in figs. 3 and 4, according to a preferred embodiment, the chain is provided with a series of elastomeric spheres along the chain of the front ring and is further provided with a lever connecting system A. Even more preferably, the dampening bodies are distributed along the individual side lengths (T1-T6) of the front circumferential chain, between one rhomboid element (R1-R6) and the other of the wheel rolling track.

By this structure, the snow chain may be mounted conventionally on the tyre, by placing it on top of the tread and pulling together the two open edges of the outer ring in the lower part of the tyre, next to the ground. In this lower position, the two chain ends are tensioned and forced closer together, helping oneselves with lever A to impart a powerful force. The force applied lengthens the chain, overcoming the elastic reaction of the elastomeric spheres, which are thereby compressed (rather, the deformable core part of the elastomeric spheres becomes compressed, which is "squashed" between the two opposite bends of the adjacent links) causing the cooperating links to move apart. Once the two chain ends have been joined (with the help of lever A), the wheel can be set in motion: after a rotation of the wheel by a few dozens degrees, the lower portion of the chain (which was locked between the ground and the tyre and did not allow the full closure of the snow chain) is released and the elastic return force of the elastomeric spheres brings back together correctly the end edges of the snow chain, automatically and evenly terminating the mounting of the chain on the tyre.

For such purpose, the Applicant was able to ascertain that the mounting tension distributes itself mostly on the circumferential chain portion closest to the two head links (i.e. the links close to the end edges which must be brought close to each other during mounting of the system, in the proximity of lever A). Therefore, it is preferable for the lengths of chain closest to the head links to have a greater density of dampening bodies with respect to the ones furthest away, so as to exploit better and with a smaller effort the available elastic return force. For example, as shown in fig. 3, the connection side lengths T1-T6 between one rhomboid element and the other (R1-R6) - rhomboid elements which belong to the rolling track - have four dampening bodies in the proximity of the head links (lengths T1 and T6), while the other ones (T2-T5) have only three dampening bodies.

It has further been evidenced that, in order to obtain correct self-tensioning of the system on the tyre, it is preferable to size the lengths of chain and the volume and number of dampening bodies 2 so that, at the end of the mounting on the tyre - before starting the vehicle - also the dampening bodies diametrically opposite to the head links are at least partly compressed.

Lever A (fig. 4) is shaped so as to ease the task of moving the head links closer together, during the mounting of the system on the tyre. For such purpose, lever A has a partly curve structure with an end hook A1 and a connection hole A2. Through connection hole A2, the lever is connected to a first link of the two head links (fig. 3). When the user wishes to move closer together and connect the two head links, he inserts the end hook A1 into the second free head link and bends backwards lever A, until hook A1 is connected with another service link M1 arranged in the proximity of the first head link.

Thereby it is possible to move closer together into an operational position the two head links, without excessive effort (due to the lever effect) despite tensioning the outer circumferential chain overcoming the natural elasticity of the dampening bodies inserted in lengths T1-T6.

The lever can be made of a metal plate, or also moulded in plastic material, possibly reinforced with glass fibre.

Instead of lever A shown in fig. 4, it is possible to employ any other similar member which eases the bringing closer together of the two head links, such as a knob with eccentric connections or a classic tensioning disc (with a curved slot).

Similarly, the arrangement of a series of elastomeric spheres on the portion of the rolling track offers an adjustment effect of the chain to the tread, taking up the slack due to the difference between the size of the chain and the various tyre sizes, as taught in EP0351362.

Should the rolling track be provided with chain elements forming rhomboidal figures R1-R5 (as shown in fig. 3), the elastomeric spheres may be favourably arranged both on the side branches and on the central branches, to achieve a desired effect of taking up of the slack.

Should the elastomeric material dampening bodies or inserts be arranged on the rolling track, care must preferably be taken to adopt links of a greater width than the outer diameter of the elastomeric bodies, so as to avoid early wear due to the chafing against the tread and the road surface.

The teaching provided here is applicable also in case it is nevertheless desired to provide a snow chain with a self-tensioning arrangement provided with a non-return ratchet, for example in order not to change the habits and preferences of some users: as a matter of fact, in this case it is possible to arrange a series of elastomeric spheres along the tensioning chain so as to make it elastic without having to resort to a further tensioning device.

As can be evinced from the above, the anti-skid system according to the invention achieves the desired functionalities through a series of significant advantages over the prior art.

The even distribution of the elastic bodies along the metal chain produces an evenly distributed elastic effect, which makes the chain well balanced and self-centring. The annoying asymmetries or chain arrangement abnormalities which used to affect prior art solutions are hence removed.

Elastomeric inserts only being required in between the chain links, no further component is necessary: the spheres, as already mentioned, are simply introduced between the links, through a deformation thereof, and remain securely fastened there due to the presence of grooves 2a and 2b.

Again, it is not necessary to provide any length of chain which runs diametrically across the wheel and it is hence avoided to interfere with the sensitive surface of the light-alloy rims. Moreover, should suitably sized elastomeric spheres be provided, for example of an outer diameter larger than the width of the metal links, the metal chain is even prevented from coming in contact with the wheel also along the front circumferential ring.
This is a further advantageous result.

Finally, being able to spread the elastic load across a number of self-contained elastomeric bodies, also in case of breakage of one or more of the same, the resulting effect does not dramatically affect chain operation.

It is hence possible to obtain a safe, reliable, cheap self-tensioning snow chain which is also simple to use (elastic devices require no special fastening action by the user).

Finally, the inherent dampening effect of the elastomeric bodies makes the chain also capable of enduring well jolts and/or operation impacts - which do not fully discharge on the bearing structure of the metal chain - especially in the portion comprising the rolling track, which extends the life thereof.

However, it is understood that the invention is not limited to the special arrangements illustrated above, which represent only non-limiting examples of the scope of the invention, but that a number of variants are possible, all within the reach of a person skilled in the field, without departing from the scope of the invention as defined in the accompanying claims.

For example, although reference has been made in the description to a spherical or ellipsoid (olive-shaped) dampening body, it is not ruled out that such element can also be of a different shape.

**Claims**

1. Anti-skid system for a wheel of a vehicle of the type comprising a metal chain consisting of mutually engaged links, each link being annularly shaped with a pair of bend portions intended to be engaged with adjacent links, **characterised in that** at least one portion of said metal chain is provided with a plurality of dampening bodies (2) arranged between said bends belonging to two adjacent links, so as to elastically maintain a predetermined distance $\Delta L$ between said bends.

2. Anti-skid system as claimed in claim 1), wherein said dampening bodies (2) have a core portion (2c) having a dimension substantially identical to said predetermined distance $\Delta L$ and a peripheral portion shaped so as to engage with said adjacent links.

3. Anti-skid system as claimed in claim 2), wherein said peripheral portion is provided with two grooves (2a, 2b) which said adjacent links are intended to engage with.

4. Anti-skid system as claimed in claim 3), wherein said links consist of a ring-shaped, bent-down rod and said grooves (2a, 2b) are sized so as to house at least part of the section of said rod.

5. Anti-skid system as claimed in claim 3) or 4), wherein said grooves (2a, 2b) extend along two perpendicular planes of said dampening body (2).

6. Anti-skid system as claimed in any one of the preceding claims, wherein said dampening bodies (2) are in the shape of small, self-contained spheres of elastomeric material.

7. Anti-skid system as claimed in claim 6), wherein said small spheres have an outer diameter equal to or greater than the width of the links.

8. Anti-skid system as claimed in any one of claims 1) to 5), wherein said dampening bodies (2) are self-contained, generally olive-shaped bodies of elastomeric material.

9. Anti-skid system as claimed in any one of claims 3) to 8), wherein said dampening body (2), between said grooves (2a, 2b), has bevels (3) apt to reduce the volume bulk of the body.

10. Anti-skid system as claimed in any one of the preceding claims, wherein said at least one portion of metal chain provided with dampening bodies coincides with a front circumferential ring.

11. Anti-skid system as claimed in claim 10), wherein said dampening bodies are arranged on all the lengths (T1-T6) of chain of the circumferential ring connecting rhomboid elements (R1-R6) of a rolling track.

12. Anti-skid system as claimed in any one of claims 1) to 9), wherein said at least one portion of metal chain provided with dampening bodies (2) coincides with the rolling track of the snow chain.

13. Anti-skid system as claimed in any one of claims 1) to 9), wherein said at least one portion of metal chain provided with dampening bodies (2) coincides with a self-tensioning chain apt to cooperate with a non-return ratchet.

14. Anti-skid system as claimed in any one of the preceding claims, further comprising a lever device (A) coupled with a first head link of a front circumferential ring, said lever being capable of engaging with a second head link opposite to the first head link of the circumferential ring and being capable of imparting a tension to move closer together said first and second head links overcoming the elastic reaction of said dampening bodies.

15. Use of an elastomeric body at the intersection of adjacent links of a metal chain, **characterised in that** said elastomeric body (2) is steadily connected between adjacent links of at least one length of a chain of an anti-skid system for vehicle wheels for elastically reducing the nominal length of said length by the measure

$$G \ = \sum_{1}^{n-1} \Delta L$$

wherein n is the number of links of said length of chain provided with elastomeric bodies (2) and ΔL is the dimension of the diameter of the deformable core (2c) of said elastomeric bodies (2), with respect to the maximum length of the same extended portion in the absence of said elastomeric bodies.

**Patentansprüche**

1. Gleitschutzsystem für ein Rad eines Fahrzeugs vom Typ, der eine Metallkette umfasst, die aus miteinander im Eingriff stehenden Verbindungselementen besteht, wobei jedes Verbindungselement eine ringförmige Form mit einem Paar gekrümmter Bereiche aufweist, die dafür vorgesehen sind, in benachbarte Verbindungselementen einzugreifen, **dadurch gekennzeichnet, dass** mindestens ein Bereich der Metallkette eine Vielzahl an Dämpfungselementen (2) aufweist, die zwischen den gekrümmten Bereichen angeordnet und zwei benachbarten Verbindungselementen zugeordnet sind, so dass elastisch ein vorbestimmter Abstand ΔL zwischen den Krümmungen aufrechterhalten wird.

2. Gleitschutzsystem nach Anspruch 1, wobei die Dämpfungselemente (2) einen Kernbereich (2c), dessen Abmessung im Wesentlichen mit dem vorbestimmten Abstand ΔL identisch ist und einen peripheren Bereich, der so geformt ist, dass er mit den benachbarten Verbindungselementen in Eingriff tritt, aufweisen.

3. Gleitschutzsystem nach Anspruch 2, wobei der periphere Bereich zwei Nuten (2a, 2b) aufweist, mit denen die benachbarten Verbindungselemente in Eingriff zu bringen sind.

4. Gleitschutzsystem nach Anspruch 3, wobei die Verbindungselemente aus einer ringförmigen, gebogenen Stange bestehen und die Nuten (2a, 2b) eine derartige Größe aufweisen, dass sie zumindest einen Teil des Bereiches der Stange aufnehmen können.

5. Gleitschutzsystem nach einem der Ansprüche 3 oder 4, wobei sich die Nuten (2a, 2b) entlang zwei senkrecht zueinander stehenden Ebenen des Dämpfungselements (2) erstrecken.

6. Gleitschutzsystem nach einem der vorangehenden Ansprüche, wobei die Dämpfungselemente (2) die Form von kleinen, eigenständigen Kugeln aus einem Elastomer aufweisen.

7. Gleitschutzsystem nach Anspruch 6, wobei die Kugeln einen Außendurchmesser aufweisen, der gleich oder größer als die Breite der Verbindungselemente ist.

8. Gleitschutzsystem nach einem der Ansprüche 1 bis 5, wobei die Dämpfungselemente (2) eigenständige, im wesentlichen olivenförmige Körper aus einem Elastomer sind.

9. Gleitschutzsystem nach einem der Ansprüche 3 bis 8, wobei das Dämpfungselement zwischen den Nuten (2a, 2b) Anfasungen (3) aufweist, die geeignet sind, die Volumengröße des Körpers zu reduzieren.

10. Gleitschutzsystem nach einem der vorangehenden Ansprüche, wobei mindestens ein mit Dämpfungselementen versehener Bereich der Metallkette mit einem vorderen umlaufenden Ring übereinstimmt.

11. Gleitschutzsystem nach Anspruch 10, wobei die Dämpfungselemente an allen Teilstücken (T1-T6) der Kette des umlaufendes Ringes, der rhomboide Elemente (R1-R6) einer Laufbahn verbindet, angeordnet sind.

12. Gleitschutzsystem nach einem der Ansprüche 1 bis 9, wobei mindestens ein mit Dämpfungselementen (2) versehener Bereich der Metallkette mit der Laufbahn der Schneekette übereinstimmt.

13. Gleitschutzsystem nach einem der Ansprüche 1 bis 9, wobei mindestens ein mit Dämpfungselementen (2) versehener Bereich der Metallkette mit einer selbstspannenden Kette übereinstimmt, die geeignet ist, mit einer Rücklauf-Sperr-Ratsche zusammenzuwirken.

**14.** Gleitschutzsystem nach einem der vorangehenden Ansprüche, weiter umfassend eine Hebelvorrichtung (A) gekoppelt mit einem ersten Kopfglied eines vorderen umlaufenden Ringes, wobei die Hebelvorrichtung in der Lage ist, mit einem zweiten Kopfglied zusammenzuwirken, das dem ersten Kopfglied des umlaufenden Ringes gegenüberliegend angeordnet ist und in der Lage ist, eine Spannung aufzubringen, um das erste und zweite Kopfglied näher zusammenzubewegen, die elastische Reaktion der Dämpfungselemente überwindend.

**15.** Benutzung eines elastomeren Elements an der Kreuzung benachbarter Verbindungselemente einer Metallkette, **dadurch gekennzeichnet, dass** das elastomere Element (2) stetig zwischen benachbarten Verbindungselementen von mindestens einem Abschnitt einer Kette eines Gleitschutzsystems für Fahrzeugräder verbunden ist, zur elastischen Reduzierung der nominalen Länge des Abschnitts in der Größenordnung

$$G = \sum_{1}^{n-1} \Delta L$$

wobei n die Anzahl der Verbindungselemente des Abschnitts der Kette ist, die mit elastomeren Elementen (2) ausgestattet ist, und $\Delta L$ die Größe des Durchmessers des verformbaren Kerns (2c) der elastomeren Elemente (2) ist, in Bezug auf die maximale Länge des gleichen gestreckten Bereiches in Abwesenheit der elastomeren Elemente.

**Revendications**

**1.** Système anti-dérapage pour une roue de véhicule du type comprenant une chaîne en métal consistant en maillons mutuellement engagés, chaque maillon étant de forme annulaire et pourvu d'une paire de parties de courbures destinées à être engagées avec les maillons adjacents, **caractérisé en ce qu'**au moins une partie de ladite chaîne en métal est pourvue d'une pluralité de corps d'amortissement (2) disposés entre lesdites courbures appartenant à deux maillons adjacents, afin de maintenir élastiquement une distance prédéterminée $\Delta L$ entre lesdites courbures.

**2.** Système anti-dérapage selon la revendication 1, dans lequel lesdits corps d'amortissement (2) ont une partie de coeur (2c) ayant une dimension sensiblement identique à ladite distance prédéterminée $\Delta L$ et une partie périphérique façonnée de façon à s'engager avec lesdits maillons adjacents.

**3.** Système anti-dérapage selon la revendication 2, dans lequel ladite partie périphérique est pourvue de deux gorges (2a, 2b) avec lesquelles lesdits maillons adjacents sont destinés à s'engager.

**4.** Système anti-dérapage selon la revendication 3, dans lequel lesdits maillons consistent en une tige recourbée, en forme d'anneau, et lesdites gorges (2a, 2b) sont dimensionnées de façon à loger au moins une partie de la section de ladite tige.

**5.** Système anti-dérapage selon la revendication 3 ou 4, dans lequel lesdites gorges (2a, 2b) s'étendent le long de deux plans perpendiculaires dudit corps d'amortissement (2).

**6.** Système anti-dérapage selon l'une quelconque des revendications précédentes, dans lequel lesdits corps d'amortissement (2) ont la forme de petites sphères, autonomes, de matériau élastomère.

**7.** Système anti-dérapage selon la revendication 6, dans lequel lesdites petites sphères ont un diamètre extérieur supérieur ou égal à la largeur des maillons.

**8.** Système anti-dérapage selon l'une quelconque des revendications 1 à 5, dans lequel lesdits corps d'amortissement (2) sont des corps généralement en forme d'olive, autonomes, de matériau élastomère.

**9.** Système anti-dérapage selon l'une quelconque des revendications 3 à 8, dans lequel ledit corps d'amortissement (2), entre lesdites gorges (2a, 2b), comporte des chanfreins (3) destinés à diminuer le volume massique du corps.

**10.** Système anti-dérapage selon l'une quelconque des revendications précédentes, dans lequel ladite au moins une partie de chaîne en métal pourvue de corps d'amortissement coïncide avec un anneau circonférentiel avant.

**11.** Système anti-dérapage selon la revendication 10, dans lequel lesdits corps d'amortissement sont agencés sur toutes les longueurs (T1-T6) de chaîne de l'anneau circonférentiel reliant les éléments rhomboïdes (R1-R6) d'une piste de roulement.

**12.** Système anti-dérapage selon l'une quelconque des revendications 1 à 9, dans lequel ladite au moins une partie de chaîne en métal pourvue de corps d'amortissement (2) coïncide avec la piste de roulement de la chaîne à neige.

**13.** Système anti-dérapage selon l'une quelconque des revendications 1 à 9, dans lequel ladite au moins une partie de chaîne en métal pourvue de corps d'amortissement (2) coïncide avec une chaîne à tension automatique apte à coopérer avec un cliquet anti-retour.

**14.** Système anti-dérapage selon l'une quelconque des revendications précédentes, comprenant, en outre, un dispositif de levier (A) couplé à un premier maillon de tête d'un anneau circonférentiel avant, ledit levier étant apte à s'engager avec un deuxième maillon de tête opposé au premier maillon de tête de l'anneau circonférentiel et étant apte à appliquer une tension pour rapprocher lesdits premier et deuxième maillons de tête, surmontant la réaction élastique desdits corps d'amortissement.

**15.** Utilisation d'un corps élastomère à l'intersection de maillons adjacents d'une chaîne en métal, **caractérisée en ce que** ledit corps élastomère (2) est relié fermement entre les maillons adjacents d'au moins une longueur d'une chaîne d'un système anti-dérapage pour roues de véhicules afin de diminuer élastiquement la longueur nominale de ladite longueur par la mesure

$$G = \sum_{1}^{n-1} \Delta L$$

où n est le nombre de maillons de ladite longueur de chaîne pourvue de corps élastomères (2) et $\Delta L$ est la dimension du diamètre du coeur déformable (2c) desdits corps élastomères (2), par rapport à la longueur maximale de la même partie étendue en l'absence desdits corps élastomères.

Fig. 1

EP 2 170 632 B1

ø 11

R 1,25

2,5

ø 6

R 1,25

2

2,5

ø 6

Fig. 2A

2

2c

2b

Fig. 2B

$R_4$

$R_3$

$R_2$

$R_1$

$R_6$

$R_5$

$T_1$ $T_2$ $T_3$ $T_4$ $T_5$ $T_6$

$M_1$

A

2

Fig. 3

$A_1$

$A_2$

A

Fig. 4

12

Fig. 5A

Fig. 5B

Fig. 5C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1520734 A
- EP 0351362 A
- DE 2112477 A
- EP 1327537 A